# EUROPEAN PATENT APPLICATION

(11) **EP 1 286 262 A1**
(43) Date of publication of application: **26.02.2003**
(21) Application number: 01402202.4
(22) Date of filing: 21.08.2001
(51) Int. Cl.: G06F 9/445, H04N 7/173, G06F 11/14

(54) **Optimising the performance of an operating system of a receiver/decoder**

(71) Applicant: Canal+ Technologies Société Anonyme, 75906 Paris Cedex 15 (FR)
(72) Inventor: Butel, Pascal, 75906 Cedex Paris 15 (FR); Trouilhet, Cedric, 75906 Cedex Paris 15 (FR)
(74) Representative: Cozens, Paul Dennis

(57) **Abstract**

A method of optimising the performance of an operating system of a receiver/decoder or portable electronic device comprises periodically automatically rebooting the operating system.

## Description

The present invention relates to a receiver/decoder for a digital broadcast system, a method of optimising the performance of an operating system, particularly of a receiver/decoder or portable electronic device, and to a method of controlling reboot of an operating system.

Digital television systems transmit television channels to the viewer in digital, rather than analogue, form. The digital channels are encoded into a digital data stream at the transmitter end, and are decoded at the receiver end using a digital receiver/decoder. To allow interactivity, an uplink may be provided, either via the same medium that delivers the television channels, or else via a different medium such as a telephone link. Further types of data, such as digital audio, software and interactive data can be or are also broadcast. As used herein, the term "digital television system" includes for example any satellite, terrestrial, cable and other system.

The term "receiver/decoder" as used herein may connote a receiver for receiving either encoded or non-encoded signals, for example television and/or radio signals, preferably in MPEG format, which may be broadcast or transmitted by some other means. The term may also connote a decoder for decoding received signals. Embodiments of such receiver/decoders may include a decoder integral with the receiver for decoding the received signals, for example, in a "set-top box", such as a decoder functioning in combination with a physically separate receiver, or such a decoder including additional functions, such as a web browser, a video recorder, or a television.

The term MPEG refers to the data transmission standards developed by the International Standards Organisation working group "Moving Pictures Expert Group" and in particular but not exclusively the MPEG-2 standard developed for digital television applications and set out in the documents ISO 13818-1, ISO 13818-2, ISO 13818-3 and ISO 13818-4. In the context of the present patent application, the term includes all variants, modifications or developments of MPEG formats applicable to the field of digital data transmission.

Computer systems, such as mainframes, servers and desktop PCs, run software which includes operating systems and other applications. Problems can occur as the operating system performance tends to deteriorate with the length of time of operation, that is, since the last boot of the system and/or the amount of processing carried out by the system. Examples of such deteriorated performance are: sluggishness in opening or closing applications; delays in displaying graphics; slowness in maximising or minimising display items; and so on.

This can be due in part to phenomena such as memory leak. Often, as time of use since the last boot increases, the deterioration in system performance can become so bad that an application running on the operating system and/or the system itself will crash, meaning that the user of the device running the operating system has lost control of the device. When this happens, the user has to reboot the system, which may mean that he has lost any unsaved data, with the rebooting being a time consuming and frustrating process. There is a chance that the user may be able to recover unsaved data that he was working on, as some modern software packages (for example, word processing and spreadsheet packages) have inherent auto-recovery facilities. This is of course dependent upon this feature being present in the application running.

There have been certain attempts in the past to overcome problems with the loss of unsaved data in a computer system which has crashed. US 5,951,686, for example, discloses a method of identifying a condition within a computer system that requires a reboot of the system and an attempt to recover any unsaved data.

The same problem also occurs with many other electronic devices which also run operating systems, such as personal digital assistants (PDAs), mobile communication devices, digital television receiver/decoders and so on. An inconvenience encountered in such a receiver/decoder or portable electronic device is that the operating system may become unstable and crash. This is similar to most computer systems which tend to crash for various reasons after a certain time of operation. In case of a crash the user of the receiver/decoder or portable electronic device loses control of running application(s) and possibly also loses important data which was being processed just before the crash.

In a preferred embodiment, the present invention seeks to solve these and other problems.

In a first aspect, the invention provides a method of optimising the performance of an operating system of a receiver/decoder or portable electronic device, the method comprising periodically automatically rebooting the operating system. By automatically rebooting the operating system, the system parameters can be regularly reset, and the risk of the user suffering the effects of slow system performance and/or system or application crashes can be reduced.

Preferably, the period at which the operating system is rebooted is shorter than a predetermined critical crash period. If the system running time does not exceed a critical length of time, it is less likely to crash, and thus the likelihood of the operating system crashing can be reduced by selecting the period within which the operating system is rebooted to be shorter than a critical crash period.

Preferably, a measure of the timing of a reboot is stored in memory for use in scheduling a subsequent reboot. As, for example, a Reboot Manager will periodically automatically reboot the system, it is useful to know the instance of the previous reboot to schedule the next reboot. Said measure may include the date or time or both.

Preferably, after execution of a reboot, the subsequent reboot is not executed until after expiry of a predetermined period of time from said execution.

Preferably, the predetermined period of time after said execution is less than 96 hours, more preferably less than 48 hours. For example, by doing so, it may be possible to further optimise the performance of the operating system by avoiding unnecessary reboots. It has been found that in the case where the user habitually switches the operating system to standby when not in use, the ideal time between reboots is in the region of 96 hours. It may be preferable to ensure a new reboot does not begin until 96 hours after the preceding one. In the event that a user rarely switches his operating system to standby, it may be preferable to set the time period between reboots to somewhere in the region of 48 hours. As mentioned above, when the operating system is habitually left in active mode, it is possible that the receiver/decoder is in operation for longer times and/or is carrying out greater amounts of processing between boots. It may therefore be preferable to decrease the minimum time period between reboots in order to decrease the likelihood of an application and/or the operating system crashing.

Additionally, it may be preferable that the subsequent reboot is inhibited until expiry of the minimum period of time from the execution. In this way, unnecessary automatic reboots can be avoided entirely, thereby ensuring optimal continuity of operation of the system.

Preferably, prior to executing a reboot, the status of at least one stored parameter and/or mode of operation of the receiver/decoder or portable electronic device is determined, and, depending on the at least one status, execution of the reboot is rescheduled. For example, checks can be made to ensure that the system is not in use. An advantage of doing this is that the reboot may then be transparent to the user as, if on detecting that the system is in use, the reboot can be rescheduled until another time when it is not in use.

Thus, in a second aspect of the invention, there is provided a method of controlling reboot of an operating system of a receiver/decoder or portable electronic device, the method comprising: prior to executing a reboot, determining the status of at least one stored parameter and/or mode of operation ofthe receiver/decoder or portable electronic device; and, depending on the at least one status, rescheduling execution of the reboot.

It may be preferable that automatic reboot is not executed if the receiver/decoder or portable electronic device is put into a standby mode after being in an active mode for shorter than said predetermined period of time after said execution. In some areas of the world, for example Europe, there may be requirements that electrical devices, when switched into a standby mode, consume less than a given amount of power, for example, 6 or 9 watts being set as the maximum power consumption when in standby. Therefore, when the device is switched to standby, it is effectively the same as switching the device off; it needs little or no processing power and there is no accrual of running time of the operating system. When the receiver/decoder or portable electronic device is switched from standby to active it is therefore effectively booted, meaning that, as long as it is switched to standby regularly, it may not need to be periodically automatically rebooted.

Preferably, when the receiver/decoder or portable electronic device is in a standby mode, execution of the reboot is rescheduled if the receiver/decoder or portable electronic device has been in the standby mode for less than a predetermined period of time. In some other parts of the world, for example the USA, switching an electrical device to standby does not require any limit on the power consumed in the standby mode, and the device can effectively keep running in the background, whilst requiring the same processing power and running time of the operating system. It may then be necessary to periodically automatically reboot the system even when it is in standby in order to avoid system crashes. In these cases, checks can be carried out to ascertain how long the operating system has been in standby. The longer the system has been in standby, the safer it can be to assume that the system is not in use, and therefore that use of the receiver/decoder or portable electronic device by a user is unlikely to be disrupted by the reboot.

Preferably, when the receiver/decoder or portable electronic device is in an active mode, execution of the reboot is rescheduled if a user input has been received by the receiver/decoder or portable electronic device during a predetermined period of time preceding determination of the at least one status. The operating system may be left on substantially permanently, that is, it is almost never switched off and on, for example if it is recommended by the vendor to leave the system on for communication purposes or for automatic updates. If the system has been used recently, then it is more likely that the user is still using the system, and that a reboot would interrupt his use of the system.

Pursuant to this, it may be desirable that the reboot is rescheduled if the interval between the user input and a second user input is less than a predetermined period of time. If a predetermined period of time passes before the reboot can be executed, then it may be possible that a more accurate determination of whether the system is in use or not may be made.

Preferably, when the operating system is in an active mode, an alert is generated so as to inform a user of imminent execution of the reboot, and the reboot is rescheduled if a user input is received during a predetermined period of time following the alert generation. In response to the checks carried out, it may not always be possible to determine without doubt that the initiation of the automatic reboot process will not interfere with the end-user; for example, if the operating system is powered on, but no commands have been entered by the user for some time. In such a case, a message may be displayed on the screen, or audible alert, which advises the user that automatic reboot is about to be initiated. The automatic reboot process can then be rescheduled in response to a command entered by the user. If no command is entered, the reboot process can be executed.

Thus, in another aspect, the invention provides a method of controlling reboot of an operating system of a receiver/decoder or portable electronic device, the method comprising, prior to executing a reboot, generating an alert so as to inform a user of imminent execution of the reboot, and rescheduling execution of the reboot if a user input is received during a predetermined period of time following alert generation.

Preferably, the reboot is executed during a specific time period in order to minimize disruption of use of the receiver/decoder or portable electronic device. If the reboot were to be performed only between, say, the hours of 12.00 am and 5.00 am, the chances of interrupting the user may be further reduced.

Preferably, prior to executing the reboot, data stored in volatile memory is copied to non-volatile memory. This copying of data may facilitate return of the receiver/decoder or portable electronic device to its normal state. For example, in the context of a receiver/decoder, information, such as Electronic Program Guide information, which could be required by the receiver/decoder soon after reboot for recording of a programme which is being transmitted, may be copied to non-volatile memory in case it cannot be correctly loaded from the broadcast stream or from a modemmed back channel following reboot. This operation may be executed as a background operation, but performing it before a reboot may be beneficial.

This is an important feature of the invention and is provided independently. Accordingly, in another aspect of the invention there is provided a method of controlling reboot of an operating system of a receiver/decoder or portable electronic device, the method comprising, prior to executing the reboot, copying data stored in volatile memory to non-volatile memory.

Preferably, prior to executing the reboot, data required after the reboot is loaded into memory to determine if it can be reloaded after the reboot without any problems. In the context of a receiver/decoder, it has been found that it is beneficial to attempt to load data such as a Guide Update Table (GUT) into memory prior to the reboot just to check that it can be loaded correctly after the reboot without any problem. A GUT is a table of information containing updated EPG information which is sent to the receiver/decoder.

Preferably, a reboot is rescheduled upon detection of the scheduling of an operating system event during a period within which the execution of the reboot is to occur. If, for example, a system or software update, any incoming call, or Electronic Program Guide transmission is scheduled for the time during which the automatic reboot process is scheduled, it may be desirable to inhibit the reboot until after the event is complete.

Preferably, the reboot may be rescheduled upon detection of the scheduling of the downloading of an electronic program guide during the period within which the execution of the reboot is to occur. It may be undesirable to interrupt the downloading of data such as electronic program guide information with a reboot of the operating system and therefore it may be better to reschedule the reboot to avoid this.

Preferably, a reboot is rescheduled upon detection of the scheduling of an output of data from the receiver/decoder or portable electronic device during a period within which the execution of the reboot is to occur.

Preferably, a reboot is rescheduled upon detection of the scheduling of a downloading of data to the receiver/decoder or portable electronic device during a period within which the execution of the reboot is to occur.

Preferably, the method further comprises: checking to ensure that no output of data from the operating system is scheduled to take place during the period within which the execution of the reboot is scheduled to take place; and rescheduling the reboot in response to detection of the output of data.

Preferably, the reboot is rescheduled upon detection that following that scheduled reboot, there would not be sufficient time for the receiver/decoder or portable electronic device to return to a normal state of operation prior to a scheduled operation of the receiver/decoder or portable electronic device. For example, in the context of a receiver/decoder, if the reboot is to take place shortly before an event such as recording a transmitted programme and it is determined that there may not be enough time for the device to reboot and return to its normal state in time before the programme transmission begins, the automatic reboot might be brought forward, or even delayed until after the programmed transmission.

Preferably the method further comprises: compiling a profile of a user's use of the receiver/decoder or portable electronic device; and scheduling execution of a reboot in dependence of said profile. By monitoring the user's use of the receiver/decoder or portable electronic device over a period of time, it may be possible to anticipate his use of the receiver/decoder or portable electronic device and thereby schedule the reboot to be executed at a time other than those times during which he habitually uses it.

Preferably a reboot is rescheduled upon detection of an emergency alert running on the receiver/decoder or portable electronic device. If the operating system were dealing with some emergency alert, this can then ensure that the reboot does not interfere with the system's handling of the alert.

Preferably a reboot is rescheduled upon detection of the scheduling of a reboot following data download during a period within which the execution of the reboot is to occur. If the system were to be rebooted by any other means, for example by remote control, it may be desirable to reschedule the automatic reboot and let the initialisation of the system be handled by the reboot following data download.

The present invention also provides a method of rebooting an operating system of a receiver/decoder or portable electronic device, the method comprising: scheduling the running of a boot application of the receiver/decoder or portable electronic device in order to reboot the operating system; prior to the scheduled running of the boot application, determining the status of at least one stored parameter and/or mode of operation of the receiver/decoder or portable electronic device; and rescheduling the scheduled running of the boot application depending on the at least one determined status so as to minimize disruption of a use of the receiver/decoder or portable electronic device during the scheduled reboot.

In another aspect, the invention provides a receiver/decoder for a digital broadcast system, the receiver/decoder comprising means, for example, a processor and associated memory, for periodically automatically rebooting an operating system of the receiver/decoder. By applying the principles of automatic rebooting, the loss of critical data such as Electronic Programme Guide (EPG) data, pay-per-view (PPV) data, and so on can be avoided.

Preferably, the reboot means is arranged to reboot the system with a period which is shorter than a predetermined critical crash period.

The receiver/decoder preferably comprises means, for example, a processor and associated memory, for storing a measure of the timing of a reboot in memory of the receiver/decoder for use in scheduling a subsequent reboot.

Preferably, the reboot means is arranged to not execute said subsequent reboot until after the lapse of a predetermined period of time from execution of said reboot. The predetermined period of time from said execution is preferably less than 96 hours, more preferably less than 48 hours.

Preferably, the receiver/decoder comprises means, for example a processor and associated memory, for, prior to execution of a reboot, determining the status of at least one stored parameter and/or mode of operation of the receiver/decoder, and, depending on the at least one status, for rescheduling execution of the reboot.

In another aspect the present invention provides a receiver/decoder for a digital broadcast system, the receiver/decoder comprising: means, for example, a processor and associated memory, for determining the status of at least one stored parameter and/or mode of operation of the receiver/decoder; and means, for example, a processor and associated memory, for rescheduling execution of a reboot of an operating system of the receiver/decoder depending on the at least one determined status.

Preferably, the rescheduling means is arranged to reschedule execution of said reboot upon determination by said determining means that the receiver/decoder has been placed in a current standby mode after having been in an active mode for shorter than a predetermined period of time from execution of a previous reboot.

Preferably, the rescheduling means is arranged to reschedule execution of said reboot upon determination by the determining means that if the receiver/decoder has been in a current standby mode for less than a predetermined period of time.

Preferably, the rescheduling means is arranged to reschedule execution of said reboot upon determination by the determining means that the receiver/decoder is in an active mode and a user input has been received by the receiver/decoder during a predetermined period of time preceding determination of the at least one status.

Preferably the rescheduling means is arranged to reschedule the reboot upon detection by the determining means of the scheduling of an operating system event during a period within which the execution of the reboot is to occur. This can allow consistency to be kept between events in a database in the receiver/decoder and the timers set by the user through the EPG. If no such check were to take place, it is possible that the reboot process would interrupt the recording of an event, or, in a worst-case scenario, the recording of the event might fail totally.

Preferably, the rescheduling means is arranged to reschedule the reboot upon detection by the determining means of the scheduling of the downloading of an electronic program guide during the period within which the execution of the reboot is to occur. A problem can arise after a reboot of a system in that, possibly, some, or all, of the broadcasted information may not be available after the reboot. This problem can be solved by loading a Guide Update Table (GUT) before the reboot to ensure that the Event Information Cache data will reload properly. Of course, if the connection to the intersect, after the reboot, takes a while, the load of all EPG data will, in turn, take a while.

Preferably, the rescheduling means is arranged to reschedule the reboot upon detection by the determining means of the scheduling of an output of data from the receiver/decoder during a period within which the execution of the reboot is to occur. For example, the checks may also include a check to ensure that no callback transaction is scheduled to take place during the period within which the reboot will take place. A callback application can be used to extract the values of various parameters stored in the receiver/decoder memory and return these values to the commercial operator via a data link.

Preferably, the rescheduling means is arranged to reschedule the reboot upon detection by the determining means of the scheduling of a downloading of data by the receiver/decoder during a period within which the execution of the reboot is to occur.

Preferably, the rescheduling means is arranged to reschedule the reboot upon detection by the determining means that following that scheduled reboot, there would not be sufficient time for the receiver/decoder to return to a normal state of operation prior to a scheduled operation of the receiver/decoder.

Preferably, the rescheduling means is arranged to reschedule the reboot upon detection by the determining means of an emergency alert running on the receiver/decoder.

Preferably, the rescheduling means is arranged to reschedule the reboot upon detection by the detection means of the scheduling of a reboot following data download during a period within which the execution of the reboot is to occur. Software upgrades are required, from time to time, to be downloaded automatically from, for example, the broadcast centre in the case of a digital television system or an Internet Service Provider (ISP). In some cases, after the download of new code, a reboot of the system may be required and may be performed automatically, the instructions for the reboot being embedded in, or appended to, the code. Preferably, a check is carried out to ensure that no code download is scheduled to take place during the period which the automatic reboot is scheduled to take place.

Preferably, the receiver/decoder comprises means, for example, a processor and associated memory, for, when the receiver/decoder is in an active mode, generating an alert so as to inform a user of imminent execution of the reboot, and wherein the rescheduling means is arranged to reschedule execution of the reboot if a user input is received during a predetermined period of time following generation of the alert.

Thus, in another aspect the present invention provides a receiver/decoder for a digital broadcast system, said receiver/decoder comprising:
means, for example, a processor and associated memory, for generating an alert so as to inform a user of imminent execution of a reboot of an operating system of the receiver/decoder; and
means, for example, a processor and associated memory, for rescheduling execution of the reboot if a user input is received during a predetermined period of time following generation of the alert.

Preferably, the receiver/decoder comprises means, for example, a processor and associated memory, for compiling a profile of a user's use of the receiver/decoder; and means, for example, a processor and associated memory, for scheduling execution of a reboot in dependence of said profile.

Preferably, the receiver/decoder comprises means, for example, a processor and associated memory, for executing said reboot during a specific time period so as to minimize disruption of use of the receiver/decoder.

Preferably, the receiver/decoder comprises means, for example, a processor and associated memory, for copying data stored in volatile memory of the receiver/decoder to non-volatile memory of the receiver/decoder prior to execution of the reboot.

Thus, in another aspect the present invention provides a receiver/decoder for a digital broadcast system, the receiver/decoder comprising means for copying data stored in volatile memory of the receiver/decoder to non-volatile memory of the receiver/decoder prior to execution of a reboot of an operating system of the receiver/decoder.

In another aspect the present invention provides a receiver/decoder for a digital broadcast system, the receiver/decoder comprising means for scheduling the running of a boot application of the receiver/decoder in order to reboot an operating system of the receiver/decoder, means for determining the status of at least one stored parameter and/or mode of operation of the receiver/decoder prior to the scheduled running of the boot application, and means for rescheduling the scheduled running of the boot application depending on the at least one determined status so as to minimize disruption of a use of the receiver/decoder during the scheduled reboot.

In another aspect, the present invention provides a method as herein described, as applied to a portable electronic device such as a personal digital assistant or mobile communication device.

The present invention also provides a computer program product adapted to perform a method as aforementioned.

The present invention also provides a computer program product adapted to periodically automatically reboot an operating system of a receiver/decoder or portable electronic device.

The present invention also provides a computer program product adapted to determine the status of at least one stored parameter and/or mode of operation of a receiver/decoder or portable electronic device, and to reschedule execution of a reboot of an operating system of the receiver/decoder or portable electronic device depending on the at least one determined status.

The present invention also provides a computer program product adapted to generate an alert so as to inform a user of imminent execution of a reboot of an operating system of a receiver/decoder or portable electronic device, and to reschedule execution of the reboot if a user input is received during a predetermined period of time following alert generation.

The present invention also provides a computer program product adapted to schedule the running of a boot application of a receiver/decoder or portable electronic device in order to reboot an operating system of the receiver/decoder or portable electronic device, to determine the status of at least one stored parameter and/or mode of operation of the receiver/decoder or portable electronic device prior to the scheduled running of the boot application, and to reschedule the scheduled running of the boot application depending on the at least one determined status so as to minimize disruption of a use of the receiver/decoder or portable electronic device.

The present invention also provides a computer program adapted to perform a method as aforementioned.

The present invention also provides a computer readable medium having stored thereon a program for periodically automatically rebooting an operating system of a receiver/decoder or portable electronic device.

The present invention also provides a computer readable medium having stored thereon a program for determining the status of at least one stored parameter and/or mode of operation of a receiver/decoder or portable electronic device, and rescheduling execution of a reboot of an operating system of the receiver/decoder or portable electronic device depending on the at least one determined status.

The present invention also provides a computer readable medium having stored thereon a program for generating an alert so as to inform a user of imminent execution of a reboot of an operating system of a receiver/decoder or portable electronic device, and rescheduling execution of the reboot if a user input is received during a predetermined period of time following alert generation.

The present invention also provides a computer readable medium having stored thereon a program for scheduling the running of a boot application of a receiver/decoder or portable electronic device in order to reboot an operating system of the receiver/decoder or portable electronic device, determining the status of at least one stored parameter and/or mode of operation of the receiver/decoder or portable electronic device prior to the scheduled running of the boot application, and rescheduling the scheduled running of the boot application depending on the at least one determined status so as to minimize disruption of a use of the receiver/decoder or portable electronic device.

The present invention also provides a signal tangibly embodying a computer program as aforementioned.

The present invention also provides a method of transmitting a signal as aforementioned.

The invention further provides apparatus, particularly a receiver/decoder or portable electronic device, or a method substantially as any one herein described or as illustrated in or with reference to the accompanying drawings or any one of the accompanying drawings.

Whist the above aspects of the present invention relate to a receiver/decoder or portable electronic device, it will be appreciated that the aspects are equally suitable for use in any computer-based system, such as a workstation, personal computer or mainframe computer.

Features implemented in hardware may generally be implemented in software, and vice versa. Any references to software and hardware features herein should be construed accordingly.

Features of one aspect may be applied to other aspects and method features may be applied in any combination to features relating to any of a receiver/decoder, computer program product, computer readable medium or the like, and *vice versa.*

Preferred features of the invention will now be described, purely by way of example, with reference to the accompanying drawings, in which:
Figure 1 is an overview of a satellite digital television system;
Figure 2 is an overview of a cable digital television system;
Figure 3 is an overall system view, with the head-end shown in more detail;
Figure 4 is a schematic of the component architecture of the receiver/decoder;
Figure 5 is a diagram of the software architecture of the receiver/decoder;
Figure 6 is a diagram showing the top half of Figure 5 in more detail;
Figure 7 is a diagram showing the bottom half of Figure 5 in more detail;
Figure 8 is a diagram showing an alternative embodiment of the bottom half of Figure 5;
Figure 9 is an overview of the interactive system of the digital television system;
Figure 10 is a more detailed view of the interactive system of a cable-based variant of the digital television system;
Figure 11 is a diagram showing the position of a Reboot Manager within the software architecture;
Figure 12 is a diagram illustrating the time delays required to reboot a receiver/decoder and the time required to return to a normal state;
Figure 13 is a flow diagram illustrating the different reset scenarios and checks carried out by an embodiment of the invention during the reboot process;
Figure 14 is a flow diagram illustrating the different reset scenarios and checks carried out by an alternative embodiment of the invention during the reboot process; and
Figure 15 is a flow diagram illustrating the different reset scenarios and checks carried out by another alternative embodiment of the invention during the reboot process

### System overview

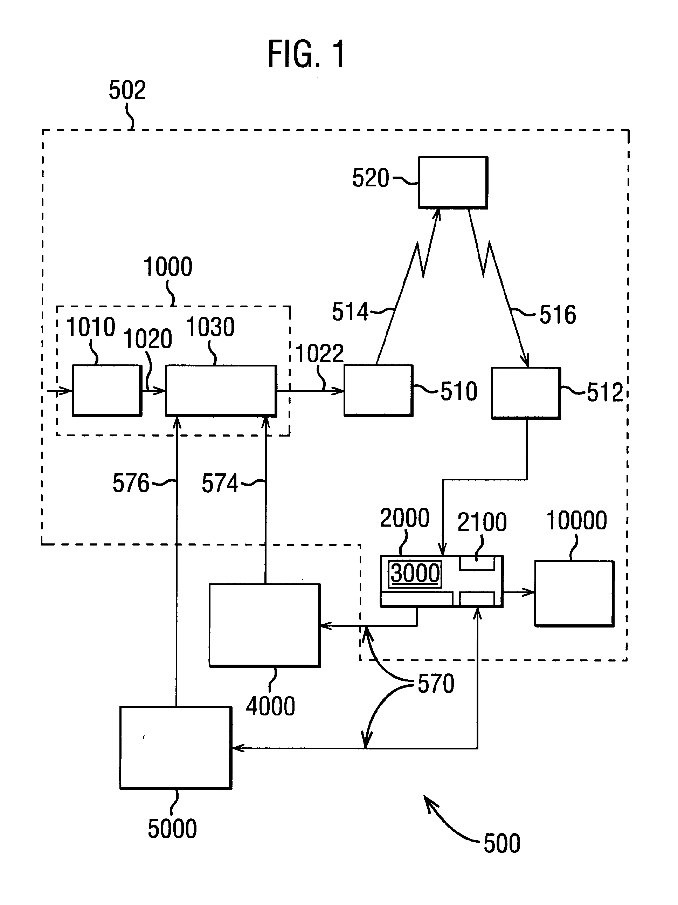

An overview of a digital television system 500 is shown in Figure 1. As will be discussed below, the system 500 comprises a broadcast centre 1000, a receiver/decoder 2000, a software/hardware architecture 3000 ofthe receiver/decoder, an interactive system 4000, and a conditional access system 5000, as will all be discussed below.

The system 500 includes a mostly conventional digital television system 502 that uses the known MPEG-2 compression system to transmit compressed digital signals. In more detail, MPEG-2 compressor 1010 in a broadcast centre 1000 receives a digital signal stream (typically a stream of video signals). The compressor 1010 is connected by linkage 1020 to a multiplexer and scrambler 1030.

The multiplexer 1030 receives a plurality of further input signals, assembles the transport stream and transmits compressed digital signals to a transmitter 1010 of the broadcast centre via linkage 1022, which can of course take a wide variety of forms including telecommunications links. The transmitter 510 transmits electromagnetic signals via uplink 514 towards a satellite transponder 520, where they are electronically processed and broadcast via notional downlink 516 to earth receiver 512, conventionally in the form of a dish owned or rented by the end user. Other transport channels for transmission of the data are of course possible, such as terrestrial broadcast, cable transmission, combined satellite/cable links, telephone networks etc.

The signals received by receiver 512 are transmitted to an integrated receiver/decoder 2000 owned or rented by the end user and connected to the end user's television set 10000. The receiver/decoder 2000 decodes the compressed MPEG-2 signal into a television signal for the television set 10000. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In the receiver/decoder 2000 a hard disk 2100 is provided, on which audiovisual and other data can be stored. This allows advanced recording and playback facilities for programmes received by the receiver/decoder, and also allows large amounts of other types of data, such as electronic programme guide data, to be stored in the receiver/decoder.

A content management and protection system (CMPS) 2300 (not shown) in the receiver/decoder provides the ability securely and flexibly to control the recording and playback of data on the hard disk 2100 (or other storage device).

In a multichannel system, the multiplexer 1030 handles audio and video information received from a number of parallel sources and interacts with the transmitter 510 to broadcast the information along a corresponding number of channels. In addition to audiovisual information, messages or applications or any other sort of digital data may be introduced in some or all of these channels interlaced with the transmitted digital audio and video information.

An interactive system 4000 is connected to the multiplexer 1030 and the receiver/decoder 2000, and is located partly in the broadcast centre and partly in the receiver/decoder. It enables the end user to interact with various applications via a back channel 570. The back channel may be, for example a Public Switched Telephone Network (PSTN) channel (for example, a modemmed back channel) or an Out of Band (OOB) channel.

A conditional access system 5000, also connected to the multiplexer 1030 and the receiver/decoder 2000 and again located partly in the broadcast centre and partly in the receiver/decoder, enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2000. Using the receiver/decoder 2000 and smartcard, the end user may purchase commercial offers in either a subscription mode or a pay-per-view mode. Typically this is achieved using the back channel 570 which is used by the interactive system 4000.

As mentioned above, programmes transmitted by the system are scrambled at the multiplexer 1030, the conditions and encryption keys applied to a given transmission being determined by the access control system 5000. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 2000 having access to an equivalent to the exploitation key stored on a smartcard inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

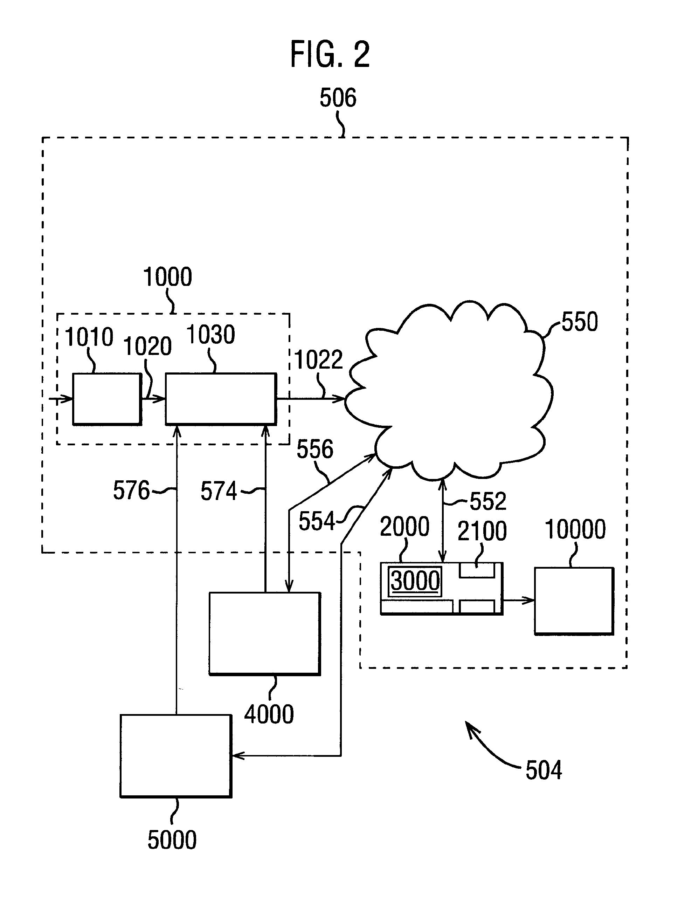

Figure 2 illustrates an alternative embodiment of a digital television system 504, utilising a cable network as the broadcast medium for the compressed digital signals. In this figure, like parts are indicated with like numerals.

The satellite transponder and transmitting and receiving stations are replaced by a cable network 550. Additionally, in this particular embodiment, the modemmed back channel between the receiver/decoder 2000 and the interactive system 4000 and conditional access system 5000 is removed, replaced by linkages 554, 556 between the cable network 550 and the conditional access system 5000 and interactive system 4000 respectively. The receiver/decoder 2000 thus communicates with the other systems via the cable network 550, utilising a cable modem or other means to allow it to send and receive data via the same link as it receives data from the broadcast centre.

The cable network 550 may be any form of wide area network (WAN), such as a dedicated connection, the internet, local cable distribution network, wireless connection, or any combination of the above. In the present embodiment, the hybrid fibre coax (HFC) network is used. It is appreciated that the various means of communication between the receiver/decoder 2000 and the other components of the television system are interchangeable.

### Conditional access system

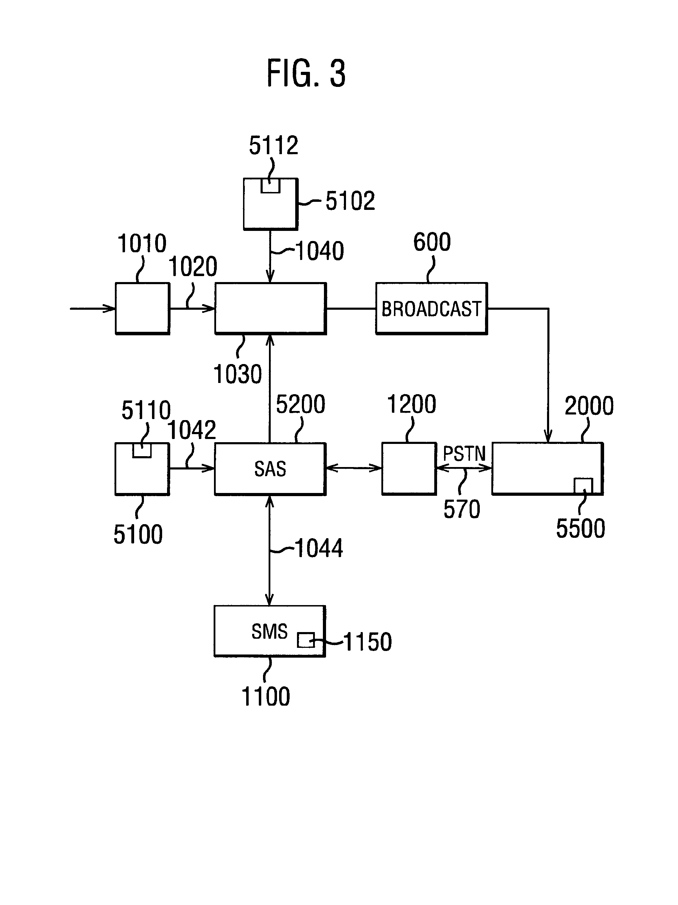

With reference to Figure 3, in overview the conditional access system 5000 includes a Subscriber Authorization System (SAS) 5200. The SAS 5200 is connected to one or more Subscriber Management Systems (SMS) 1100, one SMS for each broadcast supplier, by a link 1044, which may be a TCP-IP link or other type of link. Alternatively, one SMS could be shared between two commercial operators, or one operator could use two SMSs, and so on.

First encrypting units in the form of ciphering units 5100 utilising "mother" smartcards 5110 are connected to the SAS by linkage 1042. Second encrypting units again in the form of ciphering units 5102 utilising mother smartcards 5112 are connected to the multiplexer 1030 by linkage 1040. The receiver/decoder 2000 receives a "daughter" smartcard 5500. The receiver/decoder is connected directly to the SAS 5200 via communications servers 1200 and the modemmed back channel 570. The SAS sends amongst other things subscription rights to the daughter smartcard on request.

In variants of the preferred embodiment, internet or cable connections either complement or replace the PSTN 570 and communications servers 1200.

The smartcards contain confidential information from one or more commercial operators. The "mother" smartcard encrypts different kinds of messages and the "daughter" smartcards decrypt the messages, if they have the rights to do so.

With reference to Figure 3, in the broadcast centre, the digital video signal is first compressed (or bit rate reduced), using the MPEG-2 compressor 1010. This compressed signal is then transmitted to the multiplexer and scrambler 1030 in order to be multiplexed with other data, such as other compressed data.

The scrambler generates a control word used in the scrambling process and included in the MPEG-2 stream in the multiplexer 1030. The control word is generated internally and enables the end user's integrated receiver/decoder 2000 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the Pay Per View mode, the end user is provided with the capability to purchase events as he wishes.

Both the control word and the access criteria are used to build an Entitlement Control Message (ECM); this is a message sent in relation with one scrambled program; the message contains a control word (which allows for the descrambling of the program) and the access criteria of the broadcast program. The access criteria and control word are transmitted to the second encrypting unit 5102 via the linkage 1040. In this unit, an ECM is generated, encrypted and transmitted on to the multiplexer and scrambler 1030.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast. In respect of each scrambled component of the service, a separate ECM is required.

The multiplexer 1030 receives electrical signals comprising encrypted EMMs from the SAS 5200, encrypted ECMs from the second encrypting unit 5102 and compressed programmes from the compressor 1010. The multiplexer 1030 scrambles the programmes and transmits the scrambled programmes, the encrypted EMMs and the encrypted ECMs as electric signals to broadcast system 600, which may be for example a satellite system as shown in Figure 1, or other broadcast system. The receiver/decoder 2000 demultiplexes the signals to obtain scrambled programmes with encrypted EMMs and encrypted ECMs.

The receiver/decoder receives the broadcast signal and extracts the MPEG-2 data stream. If a programme is scrambled, the receiver/decoder 2000 extracts the corresponding ECM from the MPEG-2 stream and passes the ECM to the "daughter" smartcard 5500 of the end user. This slots into a housing in the receiver/decoder 2000. The daughter smartcard 5500 controls whether the end user has the right to decrypt the ECM and to access the programme. If not, a negative status is passed to the receiver/decoder 2000 to indicate that the programme cannot be descrambled. If the end user does have the rights, the ECM is decrypted and the control word extracted. The decoder 2000 can then descramble the programme using this control word. The MPEG-2 stream is decompressed and translated into a video signal for onward transmission to television set 10000.

If the programme is not scrambled, no ECM will have been transmitted with the MPEG-2 stream and the receiver/decoder 2000 decompresses the data and transforms the signal into a video signal for transmission to television set 10000.

The subscriber management system (SMS) 1100 includes a database 1150 which manages, amongst others, all of the end user files, commercial offers (such as tariffs and promotions), subscriptions, PPV details, and data regarding end user consumption and authorization. The SMS may be physically remote from the SAS.

The SMS 1100 transmits messages to the SAS 5200 which imply modifications to or creations of Entitlement Management Messages (EMMs) to be transmitted to end users. The SMS 1100 also transmits messages to the SAS 5200 which imply no modifications or creations of EMMs but imply only a change in an end user's state (relating to the authorization granted to the end user when ordering products or to the amount that the end user will be charged). The SAS 5200 also sends messages (typically requesting information such as call-back information or billing information) to the SMS 1100, so that it will be apparent that communication between the two is two-way.

### Receiver/decoder

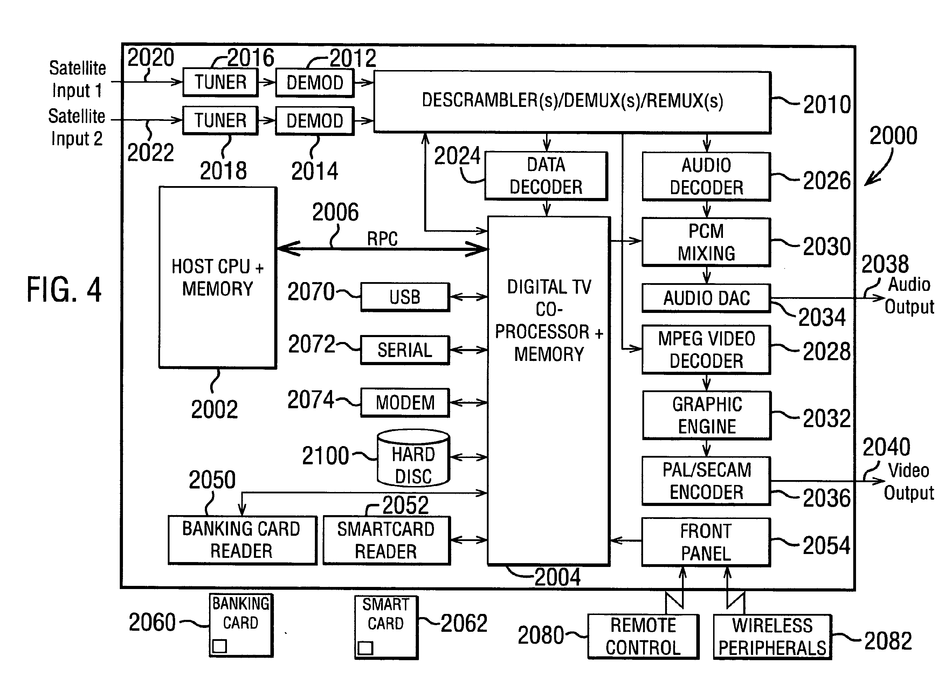

Referring to Figure 4, the various elements of receiver/decoder 2000 will now be described in terms of functional blocks.

The receiver/decoder 2000, which may be, for example, a digital set-top box (DSTB), comprises a central host processor 2002 and a digital TV coprocessor 2004, both having associated memory elements (not shown) and joined by a coprocessor bus 2006. The coprocessor 2004 is adapted to receive input data from a USB interface 2070, a serial interface 2072, a parallel interface (not shown), a modem 2074 (connected to the modem back channel 570 of Fig. 1), and switch contacts on the front panel 2054 of the decoder.

The receiver/decoder is additionally adapted to receive inputs from an infra-red remote control 2080 (and optionally from other wireless peripherals 2082 such as Bluetooth-enabled devices) and also possesses two smartcard readers 2050, 2052 adapted to read bank and subscription smartcards 2060, 2062 respectively. The subscription smartcard reader 2052 engages with an inserted subscription card 2062 and with a conditional access unit (not shown) to supply the necessary control word to a demultiplexer/descrambler/remultiplexer unit 2010 to enable the encrypted broadcast signal to be descrambled. The decoder also includes a conventional tuner 2016 and demodulator 2012 to receive and demodulate the satellite transmission before being filtered and demultiplexed by the demodulator/descrambler unit 2010. A second tuner 2018 and second demodulator 2014 are also provided, to allow, amongst other things, a second channel to be received and decoded in parallel with the first.

A hard disk 2100 is also provided, allowing storage of programme and application data received and generated by the receiver/decoder. In conjunction with the two tuners 2016, 2018, two demodulators 2012, 2014, the descrambler/demultiplexer/remultiplexer 2010, and the data decoder 2024 and audio decoder 2026, advanced recording and playback features are provided, allowing simultaneous recordings of one or more programmes while a further programme is being viewed, and more general transfers to and from the hard disk to and from the display devices and/or inputs and outputs, all occurring in parallel.

The audio output 2038 and video output 2040 in the receiver/decoder are fed by the PCM mixer 2030 and audio DAC 2034, and the MPEG video decoder 2028, graphic engine 2032 and PAL/SECAM encoder 2036 respectively. Alternative or complementary outputs may of course be provided.

As used in this description, an application is preferably a piece of computer code for controlling high level functions of preferably the receiver/decoder 2000. For example, when the end user positions the focus of remote control 2080 on a button object seen on the screen of the television set (not shown) and presses a validation key, the instruction sequence associated with the button is run. Applications and the associated middleware are executed by the host processor 2002, with remote procedure calls (RPCs) being made to the digital TV coprocessor 2004 across the coprocessor bus 2006 as and when required.

An interactive application proposes menus and executes commands at the request of the end user and provides data related to the purpose of the application. Applications may be either resident applications, that is, stored in the ROM (or FLASH or other non-volatile memory) of the receiver/decoder 2000, or broadcast and downloaded into the RAM, FLASH memory or hard disk of the receiver/decoder 2000.

Applications are stored in memory locations in the receiver/decoder 2000 and represented as resource files. The resource files comprise graphic object description unit files, variables block unit files, instruction sequence files, application files and data files.

The receiver/decoder contains memory (not shown) divided into at least one RAM volume, a FLASH volume and at least one ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

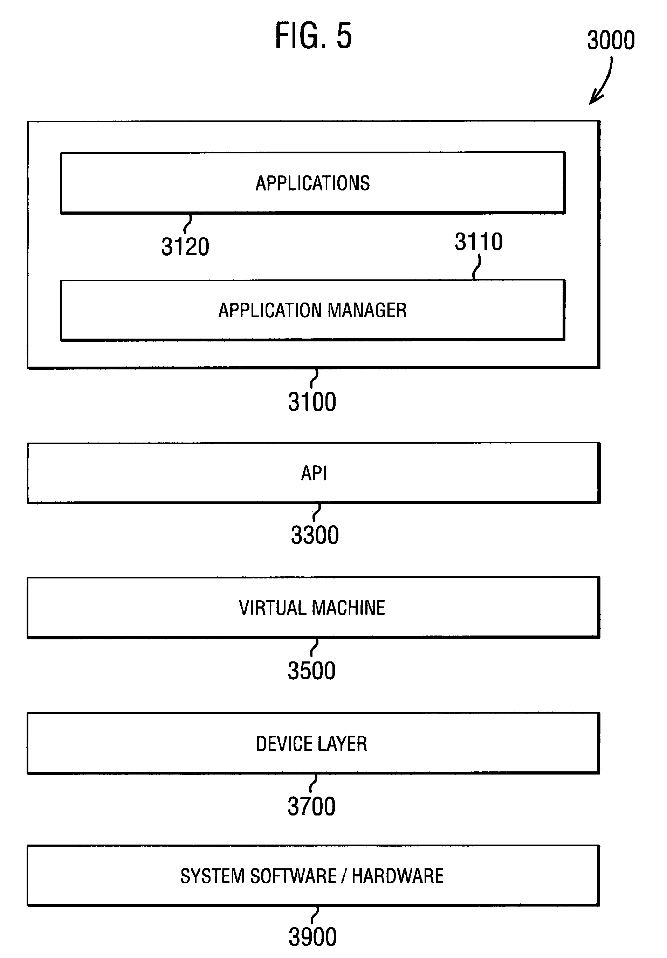

With reference to Figure 5, the software/hardware architecture 3000 of the receiver/decoder contains five software layers, organized so that the software can be implemented in any receiver/decoder and with any operating system. The various software layers are application layer 3100, application programming interface (API) layer 3300, virtual machine layer 3500, device interface layer 3700 (often abbreviated just to 'device layer') and system software/hardware layer 3900.

The application layer 3100 encompasses applications 3120 that are either resident in or downloaded to the receiver/decoder. They may be interactive applications used by customers, written in, for example, Java, HTML, MHEG-5 or other languages, or they may be applications used by the receiver/decoder for other purposes, for example for running such interactive applications. This layer is based on a set of open Application Programming Interfaces (APIs) provided by the Virtual Machine layer. This system allows applications to be downloaded to the hard disk, flash memory or RAM memory in the receiver/decoder on-the-fly or on demand. The application code can be transmitted in compressed or uncompressed format using protocols such as Data Storage Media Command and Control (DSMCC), Network File Server (NFS) or other protocols.

The API layer 3300 provides high-level utilities for interactive application development. It includes several packages that make up this high-level API. The packages provide all the functionality necessary to run interactive applications. The packages are accessible by the applications.

In a preferred embodiment the API is adapted for applications written in the Java, PanTalk or such similar programming languages. Furthermore, it can facilitate the interpretation of HTML and other formats, such as MHEG-5. Besides these features, it also includes other packages and service modules that are detachable and extensible as requirements dictate.

The virtual machine layer 3500 is composed of language interpreters and various modules and systems. This layer, managed by a kernel 3650 (not shown), consists of everything necessary to receive and execute interactive applications in the receiver/decoder.

The device interface layer 3700 includes a Device Manager and software devices (generally referred to herein as just 'devices'). Devices are software modules which consist of the logical resources necessary for management of external events and physical interfaces. The device interface layer, under the control of the Device Manager, manages communication channels between drivers and applications and provides enhanced error exception checking. Some examples of managed (hardware) devices are: card readers 3722 (not shown), modems 3730 (not shown), network 3732 (not shown), PCMCIA (Personal Computer Memory Card International Association), LED display and so on. Programmers do not have to deal with this layer directly, since the API layer controls the devices from above.

The system software/hardware layer 3900 is provided by the manufacturer of the receiver/decoder. Because of the modularity of the system and because services supplied by the higher-level operating system (such as event scheduling and memory management) are part of the virtual machine and kernel, the higher layers are not tied to a particular real-time operating system (RTOS) or to a particular processor.

Typically the virtual machine layer 3500, occasionally in combination with the device interface layer 3700 and/or API 3300, is referred to as the 'middleware' of the receiver/decoder.

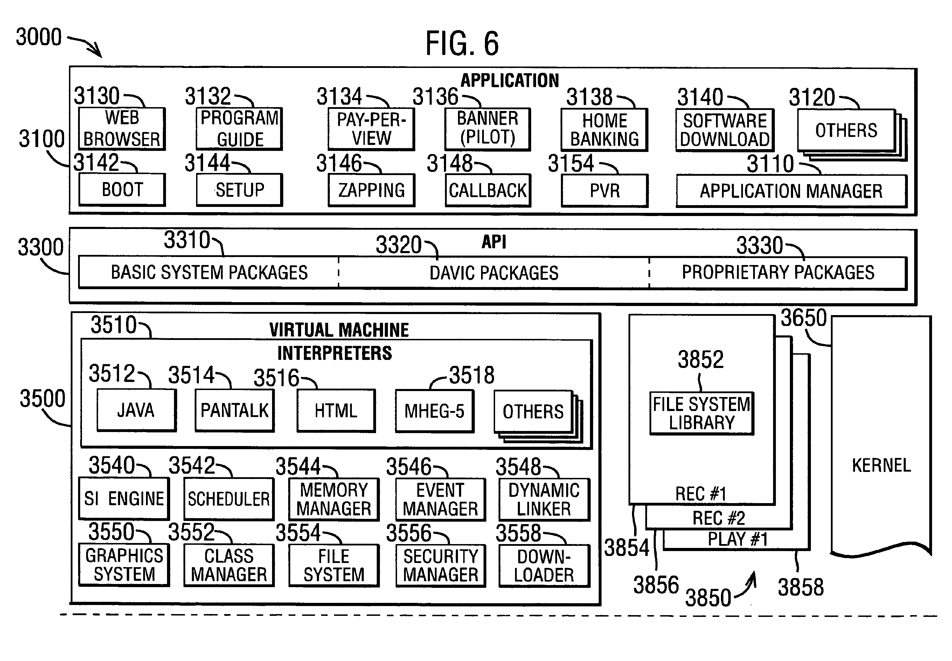

With reference to Figure 6 the software architecture of the receiver/decoder 3000 corresponding to the top half of Figure 5 (comprising the application layer 3100, API layer 3300 and virtual machine layer 3500) will now be described in more detail.

Interactive applications are applications that the user interacts with, for example, to obtain products and services, such as electronic program guides, telebanking applications and games.

There are two types of application in the application layer 3100, plus the Application Manager 3110. There are interactive applications such as a Web Browser 3130 which can be added at any time as long as they conform to the API 3300, and there are resident applications which manage and support the interactive applications. The resident applications are substantially permanent and include the following:
- Boot. The Boot application 3142 is the first application launched when the receiver/decoder is powered on. The Boot application first starts the Application Manager 3110, and then starts the "Manager" software modules in the virtual machine 3500, such as the Memory Manager 3544 and the Event Manager 3546.
- Application Manager. The Application Manager 3110 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 3144 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 3146 is used to change channels using the Program-up, Program-down and numeric keys. When another form of zapping is used, for example, through a banner (pilot) application, the Zapping application is stopped.
- Callback. The Callback application 3148 is used to extract the values of various parameters stored in the receiver/decoder memory and return these values to the commercial operator via modemmed back channel 1070 (not shown), or by other means.

Other applications in the application layer 3100 include a program guide application 3132, a pay-per-view application 3134, a banner (pilot) application 3136, a home banking application 3138, a software download application 3140 and a PVR (personal video recorder) application 3154 (see below).

As noted above, the Application Programming Interface (API) layer 3300 contains several packages. These include basic system packages 3310, used, for example, to access basic features of the virtual machine, DAVIC packages 3320, and proprietary packages 3330, used to access features ofthe software architecture unique to the principal software vendor.

Considered in more detail, the virtual machine 3500 includes the following:
- Language Interpreters 3510. Different interpreters can be installed to conform to the type of applications to be read. These include Java interpreters 3512, PanTalk interpreters 3514, HTML interpreters 3516, MHEG-5 interpreters 3518 and others.
- Service Information (SI) Engine. The SI Engine 3540 loads and monitors common Digital Video Broadcasting (DVB) or Program System Information Protocol (PSIP) tables and puts them into a cache. It allows access to these tables by applications which need the data contained in them.
- Scheduler 3542. This module allows for pre-emptive, multithreaded scheduling with each thread having its own event queue.
- Memory Manager 3544. This module manages the access to memory. It also automatically compresses data in memory when necessary and performs automatic garbage collection.
- Event Manager 3546. This module allows events to be triggered according to priority. It manages timer and event grabbing and allows applications to send events to each other.
- Dynamic Linker 3548. This module allows the resolution of addresses arising from native Java functions, loads native methods from a Java class downloaded into RAM and resolves calls from downloaded native codes towards ROM.
- Graphics System 3550. This system is object-orientated and optimized. It includes graphic window and object management as well as a vectorial font engine with multi-language support.
- Class Manager 3552. This module loads classes and resolves any class referencing problems.
- File System 3554. This module is compact and optimized to manage a hierarchical file system with multiple ROM, flash, RAM and DSMCC volumes. Flash integrity is guaranteed against any incidents.
- Security Manager 3556. This module authenticates applications and controls the access of applications to sensitive memory and other zones of the set-top box.
- Downloader 3558. This module uses automatic data loading from a remote DSMCC carousel or through the NFS protocol, with downloaded files accessed in the same way as resident ones. Memory clear-up, compression and authentication are also provided.

Furthermore, the DAVIC resource notification model is supported so that client resources are efficiently managed.

A kernel 3650 manages the various different processes running in the virtual machine 3500 and device interface layer 3700 (not shown). For efficiency and reliability reasons, the kernel implements relevant parts of the POSIX standard for operating systems.

Under control of the kernel, the virtual machine (running Java and Pantalk applications) runs in its own thread, separate to other 'server' elements of the operating system, such as the mass storage server 3850 (not shown). Corresponding provisions, such as requiring Thread IDs to be passed as parameters in system calls, are also made in the API layer 3300 to allow the applications 3120 to benefit from the multithreaded environment.

By providing multiple threads, more stability can be achieved. For example, if the virtual machine 3500 ceases to operate for some reason, by suffering a crash or being blocked for a long time by an application trying to access a device, other time-critical parts of the system, such as the hard disk server, can continue to operate.

As well as the virtual machine 3500 and kernel 3650, a hard disk video recorder (HDVR) module 3850 is provided for handling the recording and playback functions of the hard disk 2210 or other attached mass storage component. The server comprises two separate threads 3854, 3856 handling recording, one thread 3858 for handling playback, and a file system library 3852 for interfacing with the mass storage components.

An appropriate one of the threads 3854, 3856, 3858 in the hard disk video recorder (HDVR) 3850 receives commands (such as a command to start recording a particular programme) from clients such as the personal video recorder (PVR) application 3154, in response to the user pressing a 'record' button, for example.

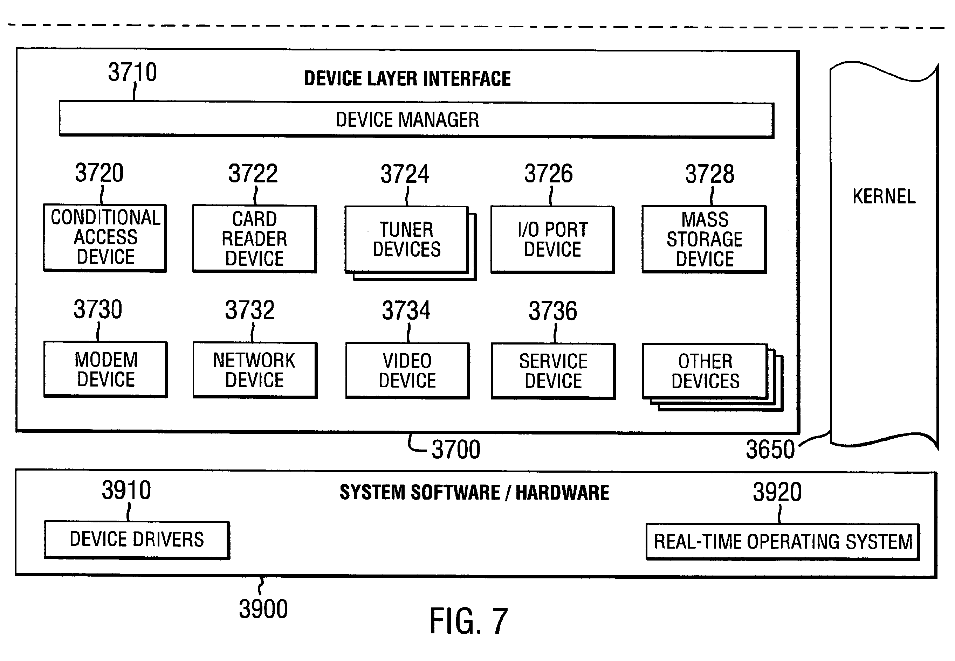

In turn, the thread in question then interacts with the service device 3736 (shown in Figure 7) to set up and synchronise the parts of the receiver/decoder handling the bitstream to be recorded or played back. In parallel, the thread also interacts with the file system library 3852 to coordinate the recording or playback operation at appropriate places on the hard disk 2210 (not shown).

The file system library 3852 then sends commands to the mass storage device 3728 (also shown in Figure 7) which tell the mass storage device 3728 which sub-transport stream (STS) to transfer (via a FIFO buffer), and on which hard disk target the stream should be stored. Allocation of clusters on the hard disk and general file management is carried out by the file system library 3852, the mass storage device itself being concerned with lower level operations.

The service device 3736 mentioned above is unique amongst the devices in that it does not relate to a physical component of the receiver/decoder. It instead provides a high level interface which groups together in a single 'instance' the various sets of tuner, demultiplexer, remultiplexer and hard disk devices in the receiver/decoder, freeing higher level processes from the difficulties of coordinating the various sub-devices.

With reference to Figure 7 the software architecture of the receiver/decoder 3000 corresponding to the bottom half of Figure 5 (comprising the device interface layer 3700 and the system software and hardware layer 3900) will now be described in more detail.

Further devices provided in the device layer include the conditional access device 3720, tuner devices 3724 corresponding to the two (or potentially more) tuners 2016, 2018 of Figure 4, the video device 3734, the I/O port device 3726, and the service device 3736 and mass storage device 3728 mentioned above.

In broad terms, a device can be regarded as defining a logical interface, so that two different devices may be coupled to a common physical port. Certain devices may communicate among themselves, and all devices also operate under the control of the kernel 3650.

Before using the services of any device, a program (such as an application instruction sequence) has to be declared as a "client", that is, a logical access-way to the device or the device manager 3710. The manager gives the client a client number which is referred to in all accesses to the device. A device can have several clients, the number of clients for each device being specified depending on the type of device. A client is introduced to the device by a procedure "Device: Open Channel". This procedure assigns a client number to the client. A client can be taken out of the device manager 3710 client list by a procedure "Device: Close Channel".

The access to devices provided by the device manager 3710 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

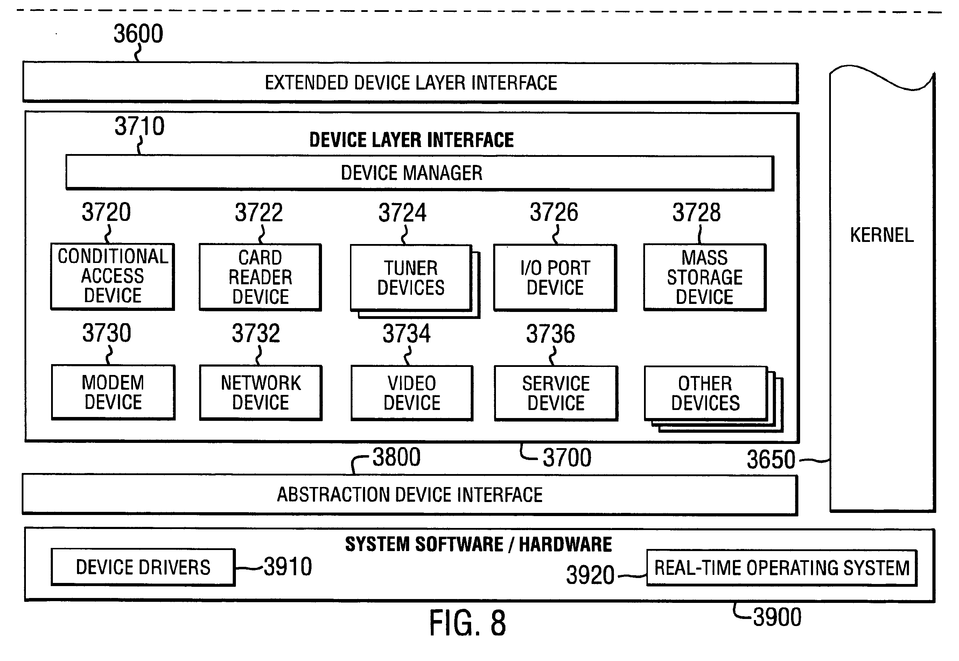

In a second embodiment of the receiver/decoder, the lower half of the architecture of the receiver/decoder is replaced by the layers shown in Figure 8.

In this embodiment, an extended device layer interface (EDLI) 3600 is provided between the virtual machine 3500 (not shown) and the device interface layer 3700, and an abstraction device interface 3800 is provided between the device interface layer 3700 and the system software/hardware layer 3900. Otherwise, like parts are indicated with like reference numerals.

The extended device layer interface (EDLI) 3600 provides a dedicated interface between the virtual machine 3500 and the device interface layer 3700 and generally provides multithreading support to the device interface layer. Functions of the EDLI include routing asynchronous events to the appropriate thread in the middleware (since the device interface layer need not itself support multithreading) and routing messages between threads.

The abstraction device interface 3800 provides a further interface between the device interface layer 3700 and the device drivers 3910 in the system software/hardware layer 3900. By providing such an interface, the large and complex device layer 3700 can be made hardware independent to a greater degree.

### Interactive system

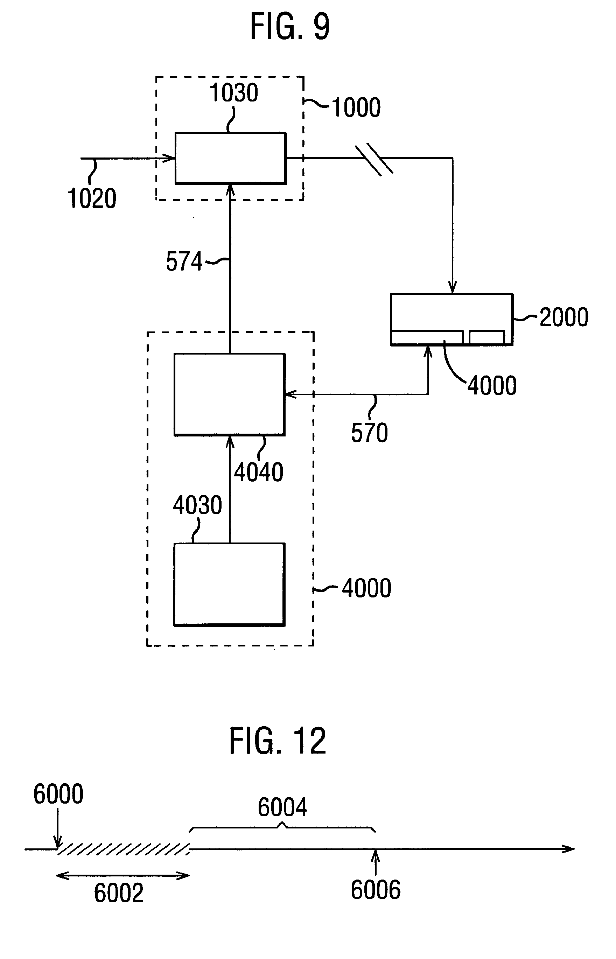

With reference to Figure 9, the interactive system 4000 will now be described in more detail.

The interactive system 4000 operates using "applications" which control the functions of the receiver/decoder and various devices contained therein. Applications are represented in the run-time engine as "resource files". A "module" is a set of resource files and data. Several modules may be required to make up an application. A "memory volume" of the receiver/decoder is a storage space for modules. An "interface" is used to download modules. Modules may be downloaded into the receiver/decoder 2000 from the MPEG-2 transport stream.

The interactive system 4000, for example, allows an end user to buy items from on-screen catalogues, consult local news and weather maps on demand and play games through his television set.

The interactive system 4000 comprises in overview four main elements:
- an authoring tool 4030 at the broadcast centre (or elsewhere) for enabling a broadcast supplier to create, develop, debug and test applications;
- an application and data server 4040 at the broadcast centre, connected to the authoring tool 4030 for enabling a broadcast supplier to prepare, authenticate and format applications and data for delivery to the multiplexer and scrambler 6030 for insertion into the MPEG-2 transport stream (typically the private section thereof) to be broadcast to the end user;
- a virtual machine including a run time engine (RTE) (not shown), which is an executable code installed in the receiver/decoder 2000 owned or rented by the end user for enabling an end user to receive, authenticate, decompress, and load applications into the working memory of the receiver/decoder 2000 for execution. The run-time engine also runs resident, general-purpose applications. The engine is independent of the hardware and operating system; and
- a modemmed back channel 570 between the receiver/decoder 2000 and the application and data server 4040 to enable signals instructing the server 4040 to insert data and applications into the MPEG-2 transport stream at the request of the end user.

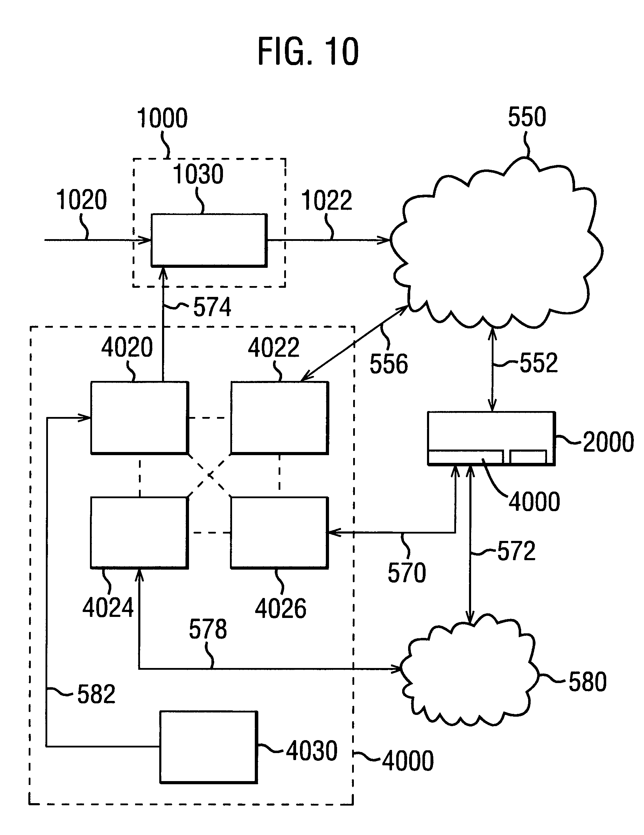

Figure 10 illustrates in more detail the interactive system of the cable-based variant of the preferred embodiment. Like parts are referenced with like numerals.

The receiver/decoder 2000 communicates with the interactive system 4000 via the modemmed back channel 570 as before, and also via the internet 1080 (using connections 572, 578), or via the cable network 550 (using the connections 552, 556). In addition to transmitting data to the receiver/decoder 2000 via the multiplexer and scrambler 1030 in the broadcast centre 1000 (using connection 574), the interactive system can also transmit data to the receiver/decoder 2000 via a return path in the cable network 550 or in some cases via the internet 580, without first requiring the receiver/decoder 2000 to initiate a connection.

To provide greater flexibility and efficiency, the application and data server can be split into different entities which communicate with the receiver/decoder 2000 via the different channels mentioned above. In the present embodiment, applications and associated data are prepared by the authoring tool 4030, stored on a first server 4020, and broadcast to the receiver/decoder 2000 by sending the data to the multiplexer and scrambler 1030 via the connection 574.

Applications executing on the receiver/decoder, which are preferably received as described above, interact with the second server 4022, third server 4024 and fourth server 4026 as required, using the modemmed back channel, internet or return path in the cable network. The four servers 4020, 4022, 4024, 4026 communicate between themselves as required, and may each have different commercial operators, allowing a flexible and extensible interactive service. Further or fewer servers, featuring any number of different connections with the receiver/decoder, may be provided as required.

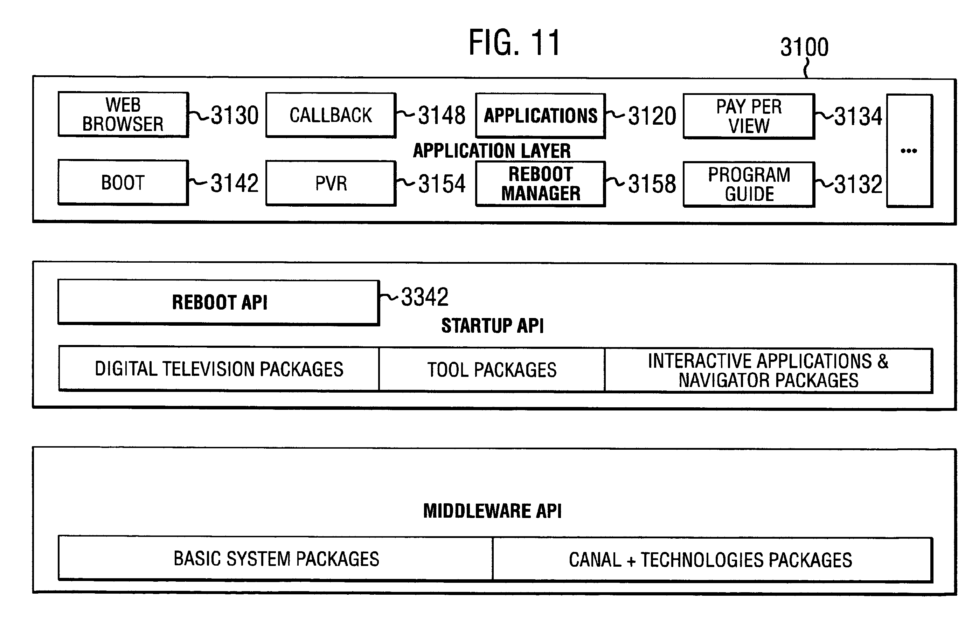

Figure 11 is a figure showing the position of the a Reboot Manager 3158 within the Application Layer 3100. The Reboot Manager 3158 is a resident application, that is, it is loaded in the memory of the receiver/decoder 2000 during manufacture. At the designated time and under the designated conditions, the Reboot Manager 3158 reboots the receiver/decoder 2000. It first powers down the receiver/decoder 2000 and then starts the Boot application 3142, which operates as described above.

Also shown in this figure is the position of the Auto Reboot API within the API layer 3300. This allows the interfacing of the virtual machine 3500 with the Reboot Manager 3158 and receiver/decoder 2000 functions, for example, for obtaining program timer information or Electronic Program Guide information.

### Receiver/decoder reboot

The action of periodically automatically rebooting the operating system of a receiver/decoder is an action which is handled carefully since the software reset is a complete reboot, precisely the same as switching the receiver/decoder off and then back on. Therefore, all functions of the receiver/decoder (such as video, audio, LED display, and so on) will stop. During this period, the user will be unable to use the receiver/decoder, and with only very limited functionality shortly thereafter (which is explained below). For this reason, the time at which the reboot happens is chosen very carefully. Further, checks will be carried by the automatic reboot software (which is resident in the application layer 3100) to minimise the risk of disrupting a use of the receiver/decoder at the time of the scheduled reboot.

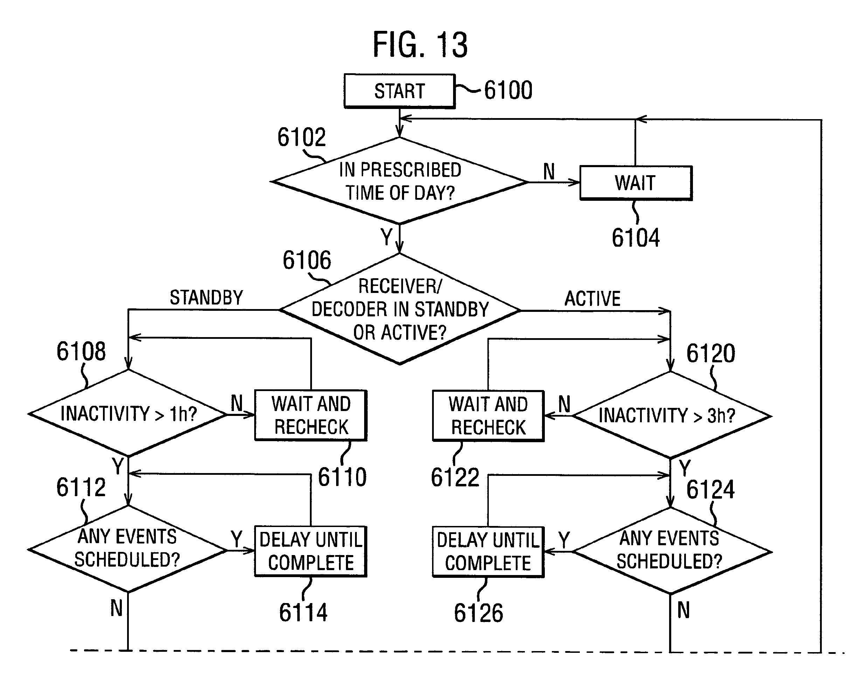

The mechanics of a reboot of a receiver/decoder are illustrated in Figure 12. The first step is to reboot the receiver/decoder 2000 at the reboot point 6000, the boot part of the reboot process being controlled by the boot application 3142 which is relaunched at this point. The time after the reboot - the reboot period 6002 - follows this and can last for up to approximately three minutes from the reboot point 6000. During this period, any user input to the receiver/decoder 2000, for example, to change channel, will have no effect.

Subsequent to the reboot period 6002, there is another period 6004 during which the receiver/decoder is returning to its "normal" state 6006. During this period, the receiver/decoder 2000 is able to send video signals to the television set 10000, but full functionality has not yet returned to the receiver/decoder 2000. At some point in this period, a connection to the intersect should be made via the back channel 570 in order to acquire EPG data. Until the receiver/decoder 2000 has managed to do this, the user will be unable to receive any TV related data. The period 6004 may last in excess of two minutes. The behaviour of timers, alarms and/or data downloads to or from the receiver/decoder 2000 may also be affected during this time.

Further, this delay should be defined by the exploitation site according to the observed delay for receiver/decoder 2000 in the field.

To further minimise the chance of interrupting a user, the reboot may be executed during a specific time period chosen in order to minimise disruption of use of the receiver/decoder say for example, between the hours of midnight and 5.00am when it is less likely that the receiver/decoder 2000 will be in use.

The checks made before a receiver/decoder reboots will now be described.

Prior to executing an automatic reboot, a number of checks are made to determine the status of at least one stored parameter and/or mode of operation of the receiver/decoder, and depending on the outcome of the checks, the reboot may be rescheduled. This may, as illustrated below, reduce the chance of disrupting the use of the receiver/decoder 2000.

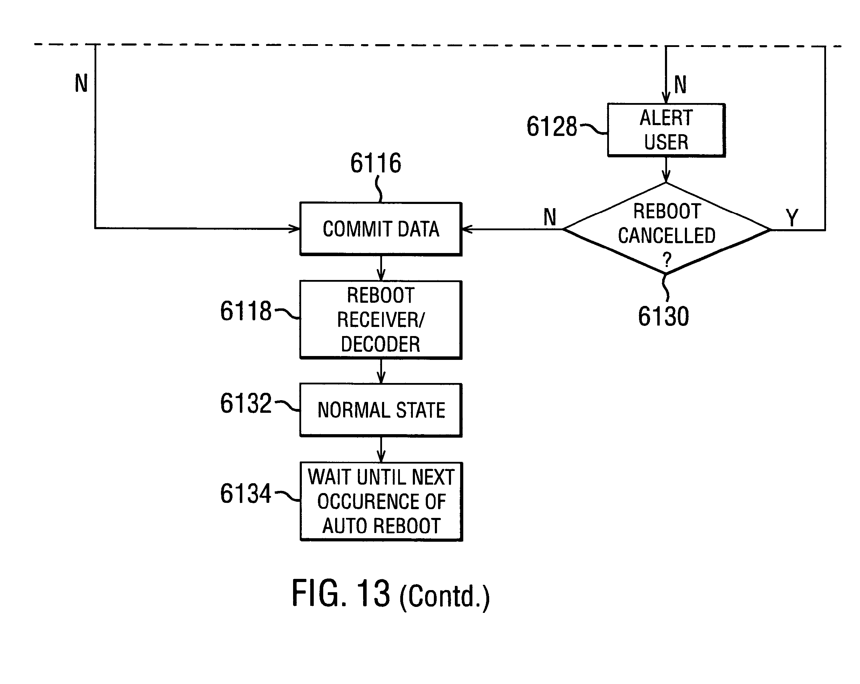

Referring to Figure 13, the auto reboot process starts (step 6100) and, at step 6102, a check is first made by the reboot software application - the Reboot Manager 3158 - that the current time is within the prescribed time period (midnight to 5.00am in this example). If not, the Reboot Manager 3158 waits until the current time is within the prescribed time period, and, when within that time period, the next check made at step 6106 by the Reboot Manager 3158 is to ascertain if the receiver/decoder 2000 is in standby or active mode.

If detected to be in standby mode, at step 6108 the Reboot Manager 3158 checks if the receiver/decoder 2000 has been in standby mode for less than a predetermined time, for example, one hour. If so, then at step 6110 the Reboot Manager 3158 waits and rechecks at step 6108. When the period of inactivity exceeds one hour at step 6108, it is deemed safe to assume that the user is not using the receiver/decoder 2000.

At step 6112 the Reboot Manager 3158 checks to detect if there are any receiver/decoder operating system events scheduled for the time period of the reboot. Examples of the types of events that are checked for include:
- that the user has not set the events timer to record any broadcast transmissions;
- no outputs of data (for example callbacks), scheduled (refer to Figure 6);
- there are no code downloads scheduled to be executed;
- a CDNT (Code Download Notification Table) is not being received;
- an EPG (Electronic Programme Guide) is not being downloaded;
- no scanning of the receiver/decoder to update the service plan is scheduled;
- no emergency alerts are running; and
- no reboots which occur automatically after the downloading of data to the receiver/decoder 2000 are scheduled.

Further, if a profile of the user's use of the receiver/decoder has been made, it may also be possible to schedule the reboot so that it is executed at a time other than those times during which he habitually uses it, or reschedule the execution of the reboot if it is scheduled to take place during such a time.

If any of these events are detected (in progress or are scheduled to take place during the period of the reboot), then at step 6114 the Reboot Manager 3158 reschedules the reboot until after the event is complete, or, until after a further period of inactivity - one hour in this example - from completion of the event, as appropriate.

If no events are in progress or scheduled, the application then, at step 6116, attempts to commit important data stored in volatile memory of the receiver/decoder 2000 to non-volatile memory. This committing of data may facilitate return of the receiver/decoder 2000 to its normal state. Examples of the type of information which may be loaded at this step include:
- all alarms (Pay Per View, recording, callbacks, and so on);
- mails;
- purchase review; and
- user preferences.

A Guide Update Table (GUT) - a table of EPG information which is sent to the receiver/decoder - is loaded by the application into non-volatile memory before the reboot in order to ensure that the Event Information cache data will be reloaded into RAM properly.

Additionally or alternatively to this, it has been found to be useful to load data, such as a GUT into memory before the reboot is carried out, so that the Reboot Manager 3158 can check if it can be reloaded correctly after the reboot without any problems.

Also during this step 6116 an attempt is made to commit all the persistent data managers.

On completion of this, the Reboot Manager 3158 reboots the receiver/decoder 2000 at stage 6118, and, in time, the receiver/decoder 2000 returns to its normal state at step 6132, which in this case is standby mode. All data which is committed to non-volatile memory at step 6116 may then be written back to volatile memory, such as RAM.

If, at step 6106, the receiver/decoder 2000 is detected to be in active mode, the Reboot Manager 3158 checks at step 6120 whether or not there has been any user action (for example, no action upon the zapping application 3146) to the receiver/decoder 2000 during a predetermined period of time (say, 3 hours) prior to determining at least one status of the receiver/decoder (see step 6124 below). If not, then the Reboot Manager 3158 continues to wait at step 6122 and then rechecks at step 6120. On expiry of the three-hour period (in this example) of inactivity, it is deemed safe to assume that the user is not using the receiver/decoder 2000.

At step 6124, further checks (identical to those at step 6112) are made and, if necessary, at step 6126, the application waits until completion of the event(s).

When no further scheduled events are detected, the application makes a final check to ensure that the reboot will not interrupt the user. This is done at step 6128 by means of generating an alert so as to inform a user of imminent execution of the reboot. This could be done for example by generating a pop-up window to be displayed on the screen of the television set 10000 or other such alert. Following the alert generation, the user is given the option to cancel the reboot within a further predetermined period of time at step 6130, and, if cancelled, the reboot is rescheduled, the Reboot Manager 3158 reverting back to step 6102. If the user does not cancel, it will be safe to assume that either he is not in front of the television set 10000, or if he is, he does not mind that the receiver/decoder 2000 is rebooted at that time. Steps 6116 "commit data" and 6118 "reboot receiver/decoder" are executed, and, in time, the receiver/decoder 2000 will return to its normal state at step 6132, which in this case, is active mode.

Following this, a subsequent reboot is not executed until after a predetermined period of time from the execution, that is, the Reboot Manager 3158 waits until the next scheduled reboot, which is set to be less than a predetermined critical crash period. The optimal interval between reboots has been found to be 96 hours if the receiver/decoder 2000 is, at least occasionally, switched to standby mode, or 48 hours when the receiver/decoder 2000 is habitually left in active mode.

As described above, in some countries there are strict requirements regarding power consumption of an electrical device when in a standby mode. For example, in Europe, the device must consume less than a specified amount of power when in standby mode. This is generally implemented by shutting down as many functions of the electrical device as possible, thereby reducing the amount of power consumed by the device to a minimum. In the context of a receiver/decoder 2000 being switched to a standby mode, all major functions are shut down. The receiver/decoder 2000 therefore needs little or no processing power; it is effectively shut down. Subsequent to this, when the receiver/decoder 2000 is switched to an active mode it is therefore effectively booted, meaning that, as long as it is switched to standby regularly, it may not need to be periodically automatically rebooted..

In, for example the USA, there is no limit to the power consumption of an electrical device when in a standby mode. Consequently, when in a standby mode, the device can effectively keep running in the background, still requiring some processing power and running time of the operating system. It may then be necessary to periodically automatically reboot the system even when it is in standby in order to avoid system crashes.

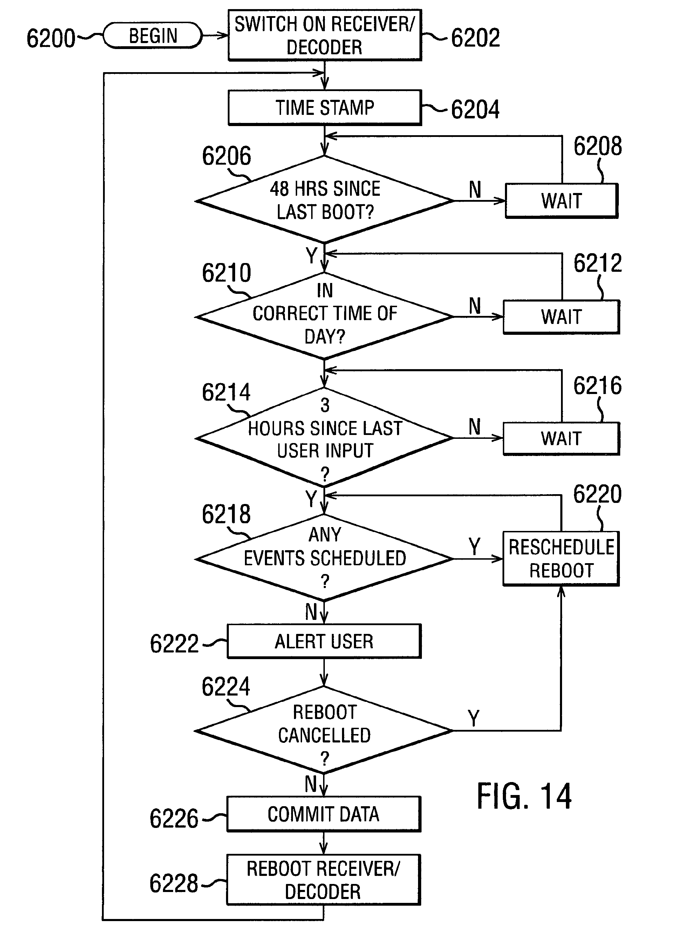

Figure 14 illustrates another embodiment as might be used when there are strict requirements regarding power consumption when the device is in a standby mode. The process begins at step 6200. At step 6202 the receiver/decoder 2000 is powered on, therefore booting the device and a date and time stamp of the boot is made at step 6204. Subsequently, the Reboot Manager 3158 periodically checks to see if the time lapsed since the last boot is greater than 48 hours, and if not, waits at step 6208 until 48 hours have expired. On expiry of this time period, the Reboot Manager 3158 then, at step 6210, checks to ensure that the current time is within the prescribed period of time, for example, between midnight and 5.00 am. If not, the Reboot Manager 3158 waits at step 6212 until the time is within the prescribed period of time. Next at step 6214, the Reboot Manager 3158 checks to ensure that three hours have expired since the last user input was made (as described above), and again, if that time period has not expired, the Reboot Manager 3158 waits at step 6216 until that time period has expired.

At step 6218, the check to ensure that no events are scheduled - again as described above - is made, and, if any are detected, the reboot is rescheduled at step 6220 to a time when no events are scheduled. Once no events are detected and reboot can go ahead, the final alert to the user, such as the pop up window described above, is made at step 6222 with the option of the user cancelling the reboot, at step 6224. If the user chooses to do so, then the reboot is rescheduled (step 6220).

If the reboot is not cancelled by the user, the Reboot Manager 3158 attempts to commit the data at step 6226 as described above, before rebooting the receiver/decoder at step 6228.

The process then returns to step 6204 where a time stamp of the boot is made.

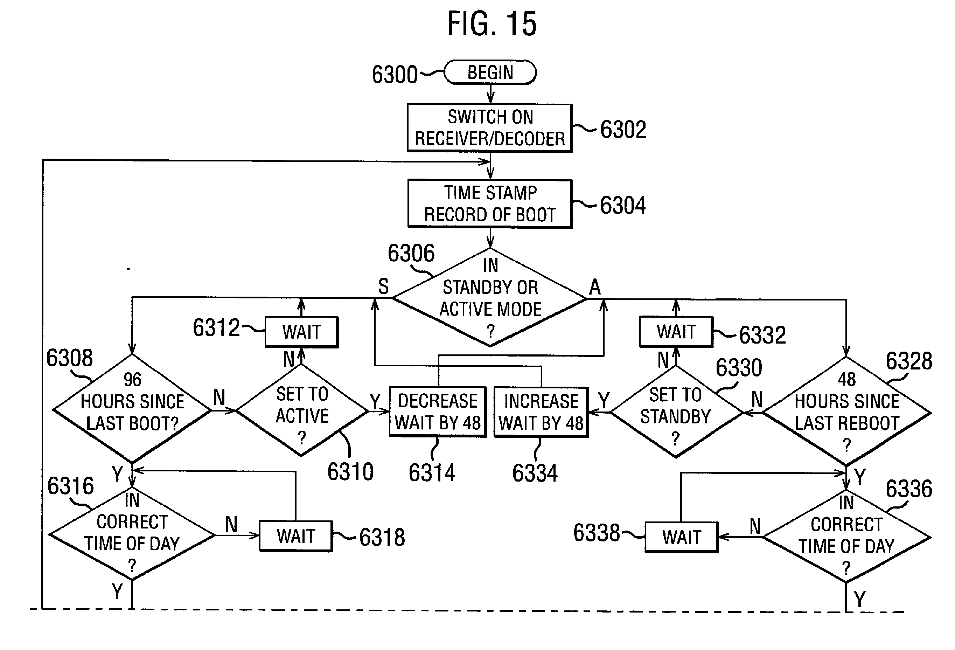

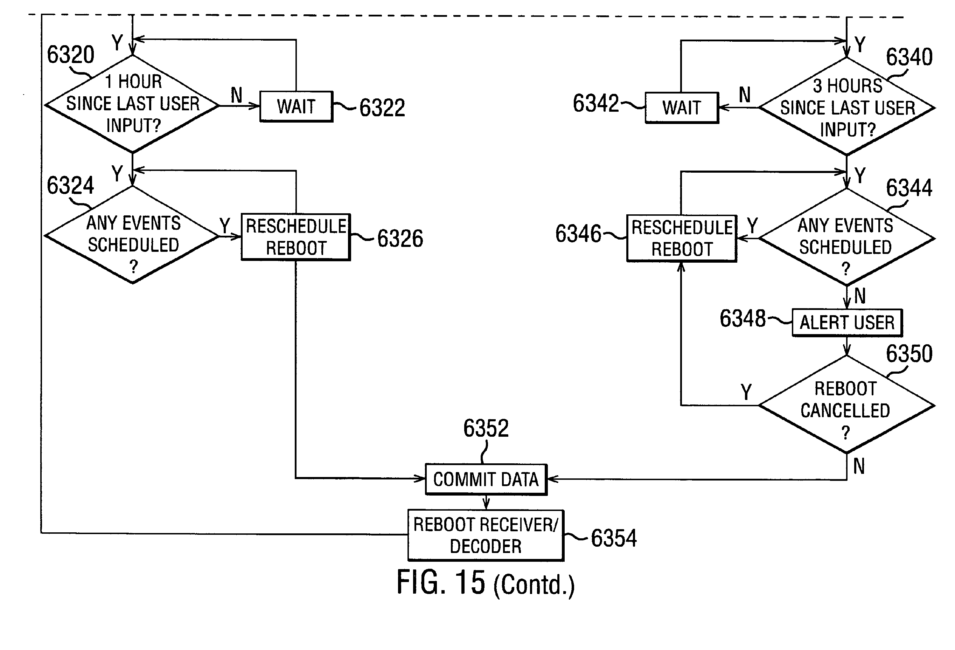

Figure 15 illustrates yet another embodiment which might be used where there are no limits to the power consumption of a device when in a standby mode. The process begins at step 6300. At step 6302 the receiver/decoder 2000 is powered on, therefore booting the device and a date and time stamp of the boot is made at step 6304. As the receiver/decoder 2000 is to be periodically rebooted whether in a standby or an active mode, the Reboot Manager 3158 monitors the status of the receiver/decoder 2000; this monitoring is first carried out at step 6306.

As the receiver/decoder has just been booted, the check at step 6306 detects that the receiver/decoder is in an active mode. The Reboot Manager 3158 then periodically checks to see if the time lapsed since the last boot is greater than 48 hours at step 6328. If not, the Reboot Manager 3158 monitors if the receiver/decoder 2000 is switched to standby at step 6330. If not, then the Reboot Manager 3158 waits at step 6332 until 48 hours have expired. On expiry of this time period, the Reboot Manager 3158, then, at step 6336 checks to ensure that the current time is within the prescribed period of time, for example, between midnight and 5.00 am. If not, the Reboot Manager 3158 waits at step 6338 until the time is within the prescribed period of time. Next at step 6340 the Reboot Manager 3158 checks to ensure that three hours have expired since the last user input was made (as described above), and again, if this time period has not expired, the Reboot Manager 3158 waits at step 6342 until that time period has expired.

At step 6344, the check to ensure that no events are scheduled - again as described above - is made by the Reboot Manager 3158, and, if any are detected, the reboot is rescheduled at step 6346 until a time when no events are scheduled. Once no scheduled events are detected and reboot can go ahead, the final alert to the user, such as the pop up window described above, is made at step 6348 with the option of the user cancelling the reboot at step 6350. If the user chooses to do so, then the reboot is rescheduled (step 6346).

If the reboot is not cancelled by the user, the Reboot Manager 3158 attempts to commit the data at step 6352 as described above, before rebooting the receiver/decoder at step 6354.

The process then returns to step 6304 where a time stamp of the reboot is made.

If, at step 6330 it is detected that the receiver/decoder 2000 has been switched to standby, then, as explained above, the ideal period between reboots of the receiver/decoder is 96 hours; the Reboot Manager then adds 48 hours to the time which must expire before the next reboot and the Reboot Manager 3158 then goes to step 6308 as will be described below.

At step 6306 if the Reboot Manager 3158 detects that the receiver/decoder 2000 is in standby mode, then at step 6308 the Reboot Manager 3158 checks to see if the time which has elapsed since the last boot is greater than 96 hours at step 6308. If not, the Reboot Manager 3158 monitors if the receiver/decoder 2000 is switched to an active mode at step 6310. If not, the Reboot Manager 3158 waits at step 6312 until 96 hours have expired. On expiry of this time period, the Reboot Manager 3158, then, at step 6316 checks to ensure that the current time is within the prescribed period of time, for example, between midnight and 5.00 am. If not, the Reboot Manager waits at step 6318 until the time is within the prescribed period of time. Next at step 6320 the Reboot Manager 3158 checks to ensure that one hour has expired since the receiver/decoder 2000 was put into a standby mode (as described above), and again, if this time period has not expired, the Reboot Manager 3158 waits at step 6322 until that time period has expired.

At step 6324, the check to ensure that no events are scheduled - again as described above - is made, and, if any are detected, the reboot is rescheduled at step 6326 until a time when no events are scheduled. Once no scheduled events are detected and reboot can go ahead and the Reboot Manager 3158 attempts to commit the data at step 6352 as described above, before rebooting the receiver/decoder at step 6354.

If at step 6310 it is detected that the receiver/decoder 2000 has been switched to an active mode, then, as explained above, the ideal period between reboots of the receiver/decoder is 48 hours; the Reboot Manager then subtracts 48 hours from the time which must expire before the next reboot and the Reboot Manager 3158 then goes to step 6328 as described above.

The precise details of the implementation of the various functions described above, and their distribution between hardware and software, are a matter of choice for the implementor and will not be described in detail. It is, however, noted that dedicated integrated circuits capable of performing the operations required in the receiver/decoder are commercially available or can be readily designed, and these can be used as the basis for a hardware accelerator, or more preferably modified to produce a dedicated hardware accelerator, to implement various of the operations required, thereby reducing the processing power required to run the software. However, the operations required may be implemented in software if sufficient processing power is available.

The modules and other components have been described in terms of the features and functions provided by each component, together with optional and preferable features. With the information given and specifications provided, actual implementation of these features and the precise details are left to the implementor. As an example, certain modules could be implemented in software, preferably written in the C programming language and preferably compiled to run on the processor used to run the application; however, some components may be run on a separate processor, and some or all components may be implemented by dedicated hardware.

The above modules and components are merely illustrative, and the invention may be implemented in a variety of ways, and, in particular, some components may be combined with others which perform similar functions, or some may be omitted in simplified implementations. Hardware and software implementations of each of the functions may be freely mixed, both between components and within a single component.

It will be readily understood that the functions performed by the hardware, the computer software, and such like are performed on or using electrical and like signals. Software implementations may be stored in ROM, or may be patched in FLASH.

Further, it will be understood that, whilst in the above reference has been made to a receiver/decoder, the same general principles would apply in the case of a portable electronic device.

It will be understood that the present invention has been described above purely by way of example, and modifications of detail can be made within the scope of the invention.

Each feature disclosed in the description and (where appropriate) the claims and drawings may be provided independently or in any appropriate combination.

Reference numerals appearing in the claims are by way of illustration only and shall have no limiting effect on the scope of the claims.

## Claims

1. A receiver/decoder for a digital broadcast system, the receiver/decoder comprising means for periodically automatically rebooting an operating system of the receiver/decoder.

2. A receiver/decoder according to Claim 1, wherein said reboot means is arranged to reboot the system with a period which is shorter than a predetermined critical crash period.

3. A receiver/decoder according to Claim 1 or Claim 2, comprising means for storing a measure of the timing of a reboot in memory for use in scheduling a subsequent reboot.

4. A receiver/decoder according to Claim 3, wherein said reboot means is arranged to not execute said subsequent reboot until after the lapse of a predetermined period of time from execution of said reboot.

5. A receiver/decoder according to Claim 4 wherein the predetermined period of time from said execution is less than 96 hours, preferably less than 48 hours.

6. A receiver/decoder according to any preceding claim, comprising means for, prior to execution of a reboot, determining the status of at least one stored parameter and/or mode of operation of the receiver/decoder, and means for, depending on the at least one status, rescheduling execution of the reboot.

7. A receiver/decoder for a digital broadcast system, said receiver/decoder comprising:
means for determining the status of at least one stored parameter and/or mode of operation of the receiver/decoder; and
means for rescheduling execution of a reboot of an operating system of the receiver/decoder depending on the at least one determined status.

8. A receiver/decoder according to Claim 6 or Claim 7, wherein said rescheduling means is arranged to reschedule execution of said reboot upon determination by said determining means that the receiver/decoder has been placed in a current standby mode after having been in an active mode for shorter than a predetermined period of time from execution of a previous reboot.

9. A receiver/decoder according to Claim 6 or Claim 7, wherein said rescheduling means is arranged to reschedule execution of said reboot upon determination by the determining means that if the receiver/decoder has been in a current standby mode for less than a predetermined period of time.

10. A receiver/decoder according to Claim 6 or Claim 7 wherein said rescheduling means is arranged to reschedule execution of said reboot upon determination by the determining means that the receiver/decoder is in an active mode and a user input has been received by the receiver/decoder during a predetermined period of time preceding determination of the at least one status.

11. A receiver/decoder according to any of Claims 6 to 12, wherein the rescheduling means is arranged to reschedule said reboot upon detection by the determining means of the scheduling of an operating system event during a period within which the execution of the reboot is to occur.

12. A receiver/decoder according to Claim 11, wherein the rescheduling means is arranged to reschedule the reboot upon detection by the determining means of the scheduling of the downloading of an electronic program guide during the period within which the execution of the reboot is to occur.

13. A receiver/decoder according to any of Claims 6 to 12, wherein the rescheduling means is arranged to reschedule the reboot upon detection by the determining means of the scheduling of an output of data from the receiver/decoder during a period within which the execution of the reboot is to occur.

14. A receiver/decoder according to any of Claims 6 to 13, wherein the rescheduling means is arranged to reschedule the reboot upon detection by the determining means of the scheduling of a downloading of data by the receiver/decoder during a period within which the execution of the reboot is to occur.

15. A receiver/decoder according to any of Claims 6 to 14, wherein the rescheduling means is arranged to reschedule the reboot upon detection by the determining means that following that scheduled reboot, there would not be sufficient time for the receiver/decoder to return to a normal state of operation prior to a scheduled operation of the receiver/decoder.

16. A receiver/decoder according to any of Claims 6 to 15, wherein the rescheduling means is arranged to reschedule the reboot upon detection by the determining means of an emergency alert running on the receiver/decoder.

17. A receiver/decoder according to any of Claims 6 to 16, wherein the rescheduling means is arranged to reschedule the reboot upon detection by the determining means of the scheduling of a reboot following data download during a period within which the execution of the reboot is to occur.

18. A receiver/decoder according to any of Claims 6 to 17, comprising means for, when the receiver/decoder is in an active mode, generating an alert so as to inform a user of imminent execution of the reboot, and wherein the rescheduling means is arranged to reschedule execution of the reboot if a user input is received during a predetermined period of time following generation of the alert.

19. A receiver/decoder for a digital broadcast system, said receiver/decoder comprising:
means for generating an alert so as to inform a user of imminent execution of a reboot of an operating system of the receiver/decoder; and
means for rescheduling execution of the reboot if a user input is received during a predetermined period of time following generation of the alert.

20. A receiver/decoder according to any preceding claim further comprising:
means for compiling a profile of a user's use of the receiver/decoder; and
means for scheduling execution of a reboot in dependence of said profile.

21. A receiver/decoder according to any preceding claim, comprising means for executing said reboot during a specific time period so as to minimize disruption of use of the receiver/decoder.

22. A receiver/decoder according to any preceding claim, comprising means for copying data stored in volatile memory of the receiver/decoder to non-volatile memory of the receiver/decoder prior to execution of the reboot.

23. A receiver/decoder for a digital broadcast system, the receiver/decoder comprising means for copying data stored in volatile memory of the receiver/decoder to non-volatile memory of the receiver/decoder prior to execution of a reboot of an operating system of the receiver/decoder.

24. A receiver/decoder for a digital broadcast system, the receiver/decoder comprising:
means for scheduling the running of a boot application of the receiver/decoder in order to reboot an operating system of the receiver/decoder;
means for determining the status of at least one stored parameter and/or mode of operation of the receiver/decoder prior to the scheduled running of the boot application; and
means for rescheduling the scheduled running of the boot application depending on the at least one determined status so as to minimize disruption of a use of the receiver/decoder during the scheduled reboot.

25. A method of optimising the performance of an operating system of a receiver/decoder or portable electronic device, the method comprising periodically automatically rebooting the operating system.

26. A method of controlling reboot of an operating system of a receiver/decoder or portable electronic device, the method comprising:
prior to executing a reboot, determining the status of at least one stored parameter and/or mode of operation of the receiver/decoder or portable electronic device; and
depending on the at least one status, rescheduling execution of the reboot.

27. A method of controlling reboot of an operating system of a receiver/decoder or portable electronic device, the method comprising:
prior to executing a reboot, generating an alert so as to inform a user of imminent execution of the reboot; and
rescheduling execution of the reboot if a user input is received during a predetermined period of time following alert generation.

28. A method of controlling reboot of an operating system of a receiver/decoder or portable electronic device, the method comprising, prior to executing the reboot, copying data stored in volatile memory to non-volatile memory.

29. A method of rebooting an operating system of a receiver/decoder or portable electronic device, the method comprising:
scheduling the running of a boot application of the receiver/decoder or portable electronic device in order to reboot the operating system;
prior to the scheduled running of the boot application, determining the status of at least one stored parameter and/or mode of operation of the receiver/decoder or portable electronic device; and
rescheduling the scheduled running of the boot application depending on the at least one determined status so as to minimize disruption of a use of the receiver/decoder or portable electronic device during the scheduled reboot.

30. A computer program product adapted to perform a method as claimed in any of Claims 25 to 29.

31. A computer program adapted to perform a method as claimed in any of Claims 25 to 29.

32. A computer readable medium having stored thereon a program for periodically automatically rebooting an operating system of a receiver/decoder or portable electronic device.

33. A computer readable medium having stored thereon a program for determining the status of at least one stored parameter and/or mode of operation of a receiver/decoder or portable electronic device, and rescheduling execution of a reboot of an operating system of the receiver/decoder or portable electronic device depending on the at least one determined status.

34. A computer readable medium having stored thereon a program for generating an alert so as to inform a user of imminent execution of a reboot of an operating system of a receiver/decoder or portable electronic device, and rescheduling execution of the reboot if a user input is received during a predetermined period of time following alert generation.

35. A computer readable medium having stored thereon a program for copying data stored in volatile memory of a receiver/decoder or portable electronic device to non-volatile memory of the receiver/decoder or portable electronic device prior to executing reboot of an operating system of a receiver/decoder or portable electronic device.

36. A computer readable medium having stored thereon a program for scheduling the running of a boot application of a receiver/decoder or portable electronic device in order to reboot an operating system of the receiver/decoder or portable electronic device, determining the status of at least one stored parameter and/or mode of operation of the receiver/decoder or portable electronic device prior to the scheduled running of the boot application, and rescheduling the scheduled running of the boot application depending on the at least one determined status so as to minimize disruption of a use of the receiver/decoder or portable electronic device.

37. A signal tangibly embodying a computer program as claimed in Claim 31.
